# EUROPÄISCHE PATENTSCHRIFT

(11) **EP 0 391 916 B1**
(45) Veröffentlichungstag und Bekanntmachung des Hinweises auf die Patenterteilung: **22.06.1994**
(21) Anmeldenummer: 88908684.9
(22) Anmeldetag: 03.10.1988
(51) Int. Cl.: A01G 3/03, B26B 15/00

(54) **ELEKTRISCH ANGETRIEBENE SCHERE**
ELECTRICALLY POWERED SHEARS
CISAILLE A COMMANDE ELECTRIQUE

(30) Priorität: 08.10.1987 IT 5370987
(43) Veröffentlichungstag der Anmeldung: 17.10.1990
(73) Patentinhaber: ROBERT BOSCH GMBH, 70442 Stuttgart (DE)
(72) Erfinder: FASANO, Osvaldo, I-10090 Villarbasse (IT)
(86) Internationale Anmeldenummer: EP8800880
(87) Internationale Veröffentlichungsnummer: WO8903171

(56) Entgegenhaltungen:
- DE-C- 3 446 802
- FR-A- 2 580 215
- GB-A- 1 331 858

## Beschreibung

### Stand der Technik

Die Erfindung geht aus von einer elektrisch angetriebenen Schere nach der Gattung des Hauptanspruchs. Eine derartige Schere ist bekannt aus der GB-A-1 331 858. Sie hat den Nachteil, daß bei ihrer Handhabung eine gewisse Verletzungsgefahr besteht, da die Messer ungeschützt sind.

### Vorteile der Erfindung

Die erfindungsgemäße Schere mit den kennzeichnenden Merkmalen des Hauptanspruchs hat demgegenüber den Vorteil, daß ihre Handhabung auch unter außergewöhnlichen Bedingungen bequem und insbesondere sicher ist.

Weitere Vorteile ergeben sich aus den Unteransprüchen.

### Zeichnung

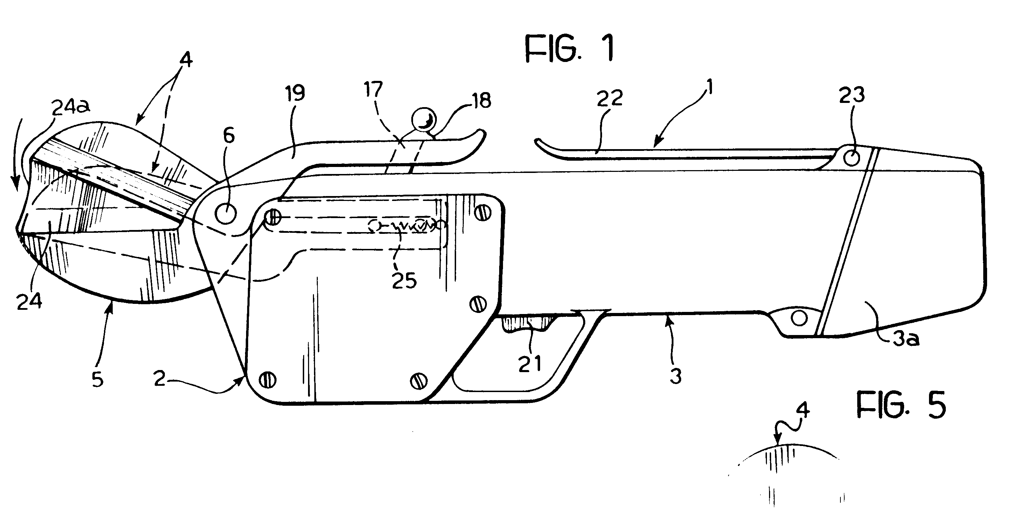

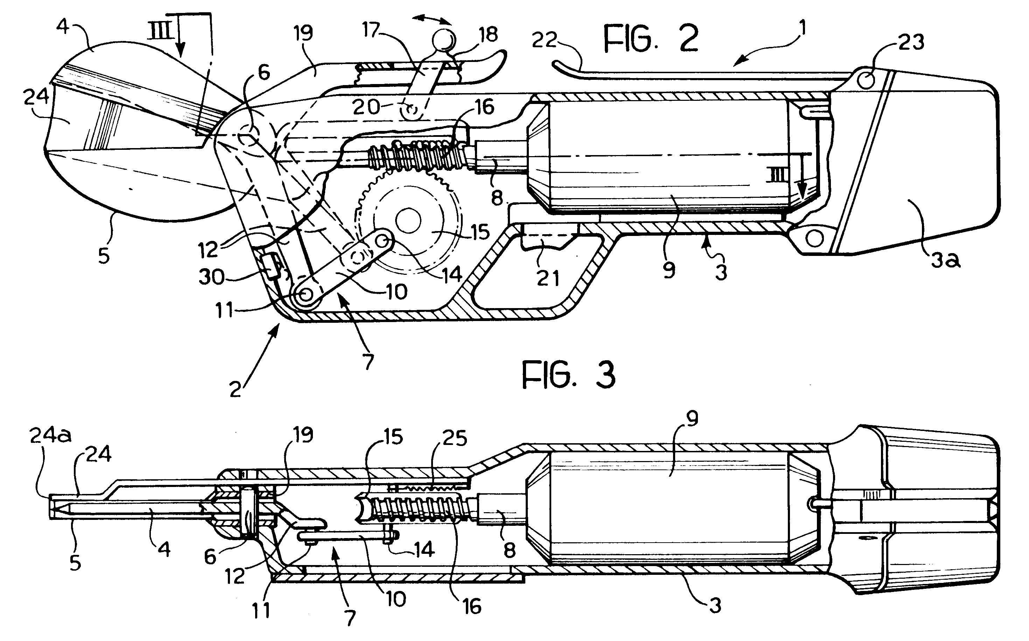

Ein Ausführungsbeispiel der Erfindung ist in der nachfolgenden Beschreibung und Zeichnung naher erläutert. Letztere zeigt in Figur 1 eine Seitenansicht einer elektrisch angetriebenen Baumschere, in Figur 2 einen Längsschnitt durch die Baumschere, in Figur 3 einen Schnitt längs III-III nach Figur 2, in den Figuren 4 und 5 Einzelheiten.

### Beschreibung des Ausführungsbeispiels

In den Figuren ist mit 1 eine batteriebetriebene Schere bezeichnet, die insbesondere zum Beschneiden Von Bäumen dient. Die Schere 1 hat ein Gehäuse 2 von länglicher Form, wovon eine mittige Partie einen Handgriff 3 bildet. Die beiden Messer 4 und 5 der Schere sind im vorderen Teil des Gehäuses auf einer Achse 6 angeordnet, das Messer 4 drehbar, das Messer 5 fest, so daß hierdurch eine geöffnete und eine geschlossene Stellung der Messer ermöglicht wird. Das Messer 4 wird mit Hilfe eines Kurbeltriebs 7 geöffnet und geschlossen, der von der Welle 8 eines Elektromotors 9 in Gang gesetzt wird, welcher sich im Inneren des Gehäuses 2 befindet. Der Kurbeltrieb weist ein Pleuel 10 auf, an dessen einem Ende 11 ein Arm 12 angelenkt ist, der fest mit dem Messer 4 verbunden ist. Das andere Ende des Pleuels 10 ist an einem Zapfen 14 angelenkt, welcher fest auf einem Zahnrad 15 sitzt. Das Zahnrad 15 kämmt mit einem Ritzel 16, das drehfest mit der Welle 8 des Elektromotors 9 verbunden ist. Im hinteren Teil des Gehäuses 3 befindet sich eine Batterie für die Speisung des Elektromotors, insbesondere eine nachladbare.

Am Messer 5 befindet sich ein dem Gehäuse zugewandter Arm 19 mit einem Längsschlitz, durch den eine Sperrklinke 17 dringt, welche eine Rastnase 18 aufweist. Dadurch ist das Messer 5 in einer bestimmten Stellung verriegelt. Die Sperrklinke 17 ist auf einem am Gehäuse angebrachten Bolzen 20 schwenkbar gelagert. Wird die Sperrklinke entgegen dem Uhrzeigersinn bewegt und damit entrastet, so kann das Messer 5 ebenfalls um die Achse 6 verschwenkt werden. Dies geschieht aber nur dann, wenn ein Körper zwischen den beiden Messern festgeklemmt ist und nur auf diese Weise befreit werden kann. Ansonsten befindet sich das Messer 5 immer in seiner durch die Sperrklinke festgelegten Stellung.

Der Stromkreis zur Speisung des Elektromotors 9 enthält einen nicht dargestellten Schalter, der vom Anlaßknopf 21 betätigbar ist und sich unmittelbar neben dem Handgriff 3 am Gehäuse 2 befindet. Die Schere ist außerdem mit einem nicht dargestellten Nährungsschalter oder Ähnlichem ausgestattet, der in Funktion tritt, wenn die Messer die Schließstellung erreicht haben sowie einen Schalter 30, der mit dem Arm 12 in Wirkverbindung steht und bei maximaler Öffnung der Schere den Elektromotor abstellt.

Der Stromkreis für den Elektromotor ist außerdem so ausgebildet, daß dann, wenn nur eine momentane Betätigung des Anlaßknopfs 21 erfolgt, der Elektromotor eingeschaltet wird, bis das Messer 4 von der geöffneten in die geschlossene Stellung bewegt wird. Anschließend wird der Elektromotor umgeschaltet, um das Messer in geöffnete Stellung zu bringen, worauf der Elektromotor abgeschaltet wird. Bei stillstehendem Elektromotor sind also die Messer geöffnet. Um eine noch größere Sicherheit zu gewährleisten, ist im Bereich des Handgriffs 3 noch ein Hebel 22 auf einem Bolzen 23 angelenkt und der einen weiteren, nicht dargestellten Schalter betätigt, durch den der elektrische Stromkreis aktiviert wird.

Aus Sicherheitsgründen ist im unmittelbaren Bereich der Messer 4, 5 und seitlich von diesen ein flach ausgebildetes, verschiebbares Schutz- element 24 angeordnet, das den Spalt zwischen den beiden Messern schützt und von dem ein Arm in das Gehäuse 3 eintaucht. Auf den Arm des Schutzelement wirkt eine im Gehäuse angeordnete Zugfeder 25 derart ein, daß sie das Schutzelement nach außen in den Bereich der Messer zieht, und zwar bis zu deren Vorderkanten. An einem im Gehäuse 3 liegenden Teil des Schutzelements 24 ist eine Partie ausgebildet, die einen elektrischen Schalter 27 betätigt, sobald das Schutzelement nach hinten eingeschoben wird. Das ist dann der Fall, wenn das abzuschneidende Teil zwischen die Messer gelangt. Durch die Betätigung des Schalters 27 wird der Elektromotor betriebsbereit.

## Patentansprüche

1. Elektrisch angetriebene Schere mit einem feststehenden und einem beweglichen Schermesser (4, 5), von denen letzteres über einen von einem Elektromotor (9) angetriebenen mechanischen Antrieb (7) betätigbar ist, dessen Teile in einem Gehäuse (2) angeordnet sind, wobei das im Betriebszustand durch eine Arretiervorrichtung (17 bis 20) festgestellte Schermesser (5) durch Lösen derselben ebenfalls um die den beiden Schermessern gemeinsame Achse (6) verdrehbar ist, dadurch gekennzeichnet, daß seitlich der Schermesser (4, 5) ein verschiebbares Schutzelement (24) angeordnet ist, das einen in das Gehäuse reichenden Fortsatz aufweist, auf das eine das Schutzelement in Sicherheitsstellung bringbare Feder (25) einwirkt, und daß das Schutzelement mit einem elektrischen Schalter (27) in Wirkverbindung steht, durch den der Stromkreis des Elektromotors aktivierbar ist.

2. Schere nach Anspruch 1, dadurch gekennzeichnet daß die Arretiervorrichtung (17 bis 20) eine am Gehäuse an einem Bolzen (20) schwenkbar gelagerte Sperrklinke (17) aufweist, die mit einem am feststehenden Schermesser (5) ausgebildeten Arm in Wirkverbindung steht.

3. Schere nach einem der Ansprüche 1 bis 2, dadurch gekennzeichnet, daß als Antriebsmittel für das bewegliche Schermesser (4) ein Kurbeltrieb (7) dient.

4. Schere nach einem der Ansprüche 1 bis 3, dadurch gekennzeichnet, daß der Kurbeltrieb (7) ein Pleuel (10) aufweist mit einem angelenkten Arm (12) für das bewegliche Schermesser (4), der mit einem elektrischen Schalter (30) in Wirkverbindung steht, durch den das bewegliche Schermesser (4) durch den Elektromotor in seine Offenstellung bringbar ist.

5. Schere nach einem der Ansprüche 1 bis 4, dadurch gekennzeichnet, daß der Elektromotor (9) durch eine im Gehäuse angeordnete Batterie (3a), insbesondere eine nachladbare, mit Strom versorgbar ist.

## Claims

1. Electrically powered shears having a fixed and a movable cutting blade (4, 5), of which the latter can be actuated via a mechanical drive (7) which is driven by an electric motor (9) and whose parts are arranged in a housing (2), it being the case that the cutting blade (5) fixed in the operating state by a locking device (17 to 20) can likewise be rotated by releasing said locking device about the axis (6) common to the two cutting blades, characterized in that there is arranged to the side of the cutting blades (4, 5) a displaceable protective element (24), having an extension reaching into the housing, on which a spring (25) acts which can bring the protective element into a safety position, and in that the protective element is operationally connected to an electric switch (27) by means of which the circuit of the electric motor can be activated.

2. Shears according to Claim 1, characterized in that the locking device (17 to 20) has a retaining pawl (17) which is pivotably mounted on the housing on a bolt (20) and which is operationally connected to an arm constructed on the fixed cutting blade (5).

3. Shears according to one of Claims 1 and 2, characterized in that a crank drive (7) serves as the drive means for the movable cutting blade (4).

4. Shears according to one of Claims 1 to 3, characterized in that the crank drive (7) has a connecting rod (10) with a pivoted arm (12) for the movable cutting blade (4), which arm is operationally connected to an electric switch (30) by means of which the movable cutting blade (4) can be brought into its open position by means of the electric motor.

5. Shears according to one of Claims 1 to 4, characterized in that the electric motor (9) can be supplied with current by a battery (3a), in particular a rechargeable battery, arranged in the housing.

## Revendications

1. Cisaille électrique comportant un couteau fixe et un couteau mobile (4, 5), ce dernier étant commandé par un entraînement mécanique (7) à partir d'un moteur électrique (9), dont des parties sont logées dans un boîtier (2), le couteau (5), bloqué en position de fonctionnement par un dispositif de blocage (17-20), pouvant également être pivoté autour de l'axe (6) commun aux deux couteaux après desserrage, cisaille caractérisée en ce qu'à côté des couteaux (4, 5) il y a un élément de protection (24) qui peut coulisser et qui comporte un prolongement pénétrant dans le boîtier et sur lequel agit un ressort (25) mettant l'élément de protection en position de protection et cet élément de protection coopère avec un commutateur électrique (27) qui peut activer le circuit électrique du moteur.

2. Cisaille selon la revendication 1, caractérisée en ce que le dispositif de blocage (17-20) comporte un verrou (17) pivotant autour d'un axe (20) sur le boîtier, ce verrou coopérant avec un bras réalisé sur le couteau fixe (5).

3. Cisaille selon l'une des revendications 1 à 2, caractérisée en ce que le moyen d'entraînement du couteau mobile (4) est un entraînement à manivelle (7).

4. Cisaille selon l'une des revendications 1 à 3, caractérisée en ce que l'entraînement à manivelle (7) comprend une bielle (10) avec un bras articulé (12) pour le couteau mobile (4) qui coopère avec un commutateur électrique (30) mettant le couteau mobile (4) en position d'ouverture à l'aide du moteur électrique.

5. Cisaille selon l'une des revendications 1 à 4, caractérisée en ce que le moteur électrique (9) est alimenté par une batterie (3a), notamment une batterie rechargeable logée dans le boîtier.
